# EUROPEAN PATENT APPLICATION

(11) **EP 2 451 156 A1**
(43) Date of publication of application: **09.05.2012**
(21) Application number: 10793816.9
(22) Date of filing: 24.06.2010
(51) Int. Cl.: H04N 7/18, B60R 1/00, B60R 21/00

(54) **VEHICLE-MOUNTED VIDEO DISPLAY DEVICE**

(30) Priority: 29.06.2009 JP 2009153393
(71) Applicant: Panasonic Corporation, Kadoma-shi Osaka 571-8501 (JP)
(72) Inventor: NOJIRI, Atsushi, Chuo-ku Osaka 540-6207 (JP); MOCHIZUKI, Ryo, Chuo-ku Osaka 540-6207 (JP); KISHI, Yashio, Chuo-ku Osaka 540-6207 (JP); AIZAWA, Shinya, Chuo-ku Osaka 540-6207 (JP)
(74) Representative: Grünecker, Kinkeldey, Stockmair & Schwanhäusser
(86) International application number: PCT/JP2010/004213
(87) International publication number: WO 2011/001642

(57) **Abstract**

Disclosed is a vehicle-mounted video display device that allows a vehicle occupant to intuitively ascertain the orientation of the video being displayed on a display in the vehicle among multiple videos of the vehicle perimeter captured by multiple cameras, was captured a video displayed in the vehicle interior, and thereby allowing the vehicle occupant to ascertain the situation around the vehicle at a glance. A central processing device (6) displays a video on a display device (4), changing the viewpoint of the video continuously or in stages from the viewpoint of a video created by a video processing device (5) and displayed on the display device (4), to the viewpoint of a video of a specific direction from among videos of the vehicle perimeter captured by a video capture means (1).

## Description

### Technical Field

The present invention relates to a vehicle-mounted video display apparatus that displays video that images a vehicle's surroundings in order to enable the driver to check the situation around the vehicle.

### Background Art

A technology has hitherto been known whereby a plurality of cameras that shoot a vehicle's surroundings in different shooting directions are installed on the vehicle, viewpoint-converted images of a captured plurality of videos are combined and an overhead-view video showing the entire surroundings of the vehicle is displayed on a display in the passenger compartment of the vehicle. In recent years, a technology has been known whereby a camera video displayed on a display in the passenger compartment is switched selectively in response to an operation by the driver, enabling the situation around the vehicle to be conveyed to the driver in a more easily understood fashion. In particular, a technology is known that enables which of a plurality of images captured by a plurality of cameras is being displayed to be ascertained intuitively (see Patent Literature 1, for example).

### Citation List

### Patent Literature

PTL 1 Patent 2008-17311

### Summary of Invention

### Technical Problem

However, with the above conventional technology, it is necessary for a selected camera video to be displayed simultaneously with a related video. Since a vehicle-mounted display is small, a camera video becomes difficult to distinguish when a plurality of videos are displayed on the display simultaneously. Consequently, there is a problem in that, if an attempt is made to enable a driver to ascertain intuitively which camera video is being displayed, it becomes difficult for the driver to ascertain the situation around the vehicle at a glance. Furthermore, with the above technology, it is necessary for a driver to learn the relationship between two videos, and associated operations, in advance.

It is an object of the present invention to provide a vehicle-mounted video display apparatus that enables a vehicle occupant (mainly a driver) to ascertain intuitively the shooting direction of video displayed on a display in the passenger compartment among a plurality of videos imaging the vehicle's surroundings by means of a plurality of cameras, and also enables the vehicle occupant to ascertain the situation around the vehicle at a glance.

### Solution to Problem

A vehicle-mounted video display apparatus of the present invention is provided with: an imaging section comprising a plurality of cameras that shoot a vehicle's surroundings in different shooting directions; a creation section that creates video based on captured video captured by the imaging section; a display section that displays video created by the creation section; and a control section that performs control that selects video of a specific direction from among captured videos captured by the imaging section, and switches display for the display section from video created by the creation section to selected video of a specific direction; wherein the control section causes the display section to display video whose viewpoint is changed continuously or in stages from the viewpoint of video created by the creation section to the viewpoint of selected video of a specific direction.

### Advantageous Effects of Invention

The present invention enables a vehicle occupant to ascertain intuitively the shooting direction of video displayed on a display in the passenger compartment among a plurality of videos imaging the vehicle's surroundings by means of a plurality of cameras, and also to ascertain the situation around the vehicle at a glance.

### Brief Description of Drawings

FIG. 1 is a block diagram of a vehiele-mounted video display apparatus according to Embodiment 1 of the present invention;
FIG.2 is a flowchart showing video display control by a display control apparatus that is a principal part of FIG. 1;
FIG.3 is a flowchart of next display video decision processing that is a principal part of FIG.2;
FIG.4 is a drawing explaining viewpoint changing when a vehicle user selects rear camera video as video to be displayed next by means of an operation input apparatus from a state in which overhead-view video is displayed on a display apparatus that is a principal part in FIG.1;
FIG.5 is a drawing explaining changing of video displayed on a display apparatus according to the virtual viewpoints shown in FIG.4;
FIG.6 is a drawing explaining Sample Variant 1 of the video changing in FIG.5;
FIG.7 is a drawing explaining Sample Variant 2 of the video changing in Fig.5;
FIG.8 is a drawing explaining Sample Variant 3 of the video changing in Fig.5;
FIG.9 is a drawing explaining Sample Variant 4 of the video changing in FIG.5; and
FIG. 10 is a flowchart of a sample variant of the video display control in FIG.2.

### Description of Embodiments

### (Embodiment 1)

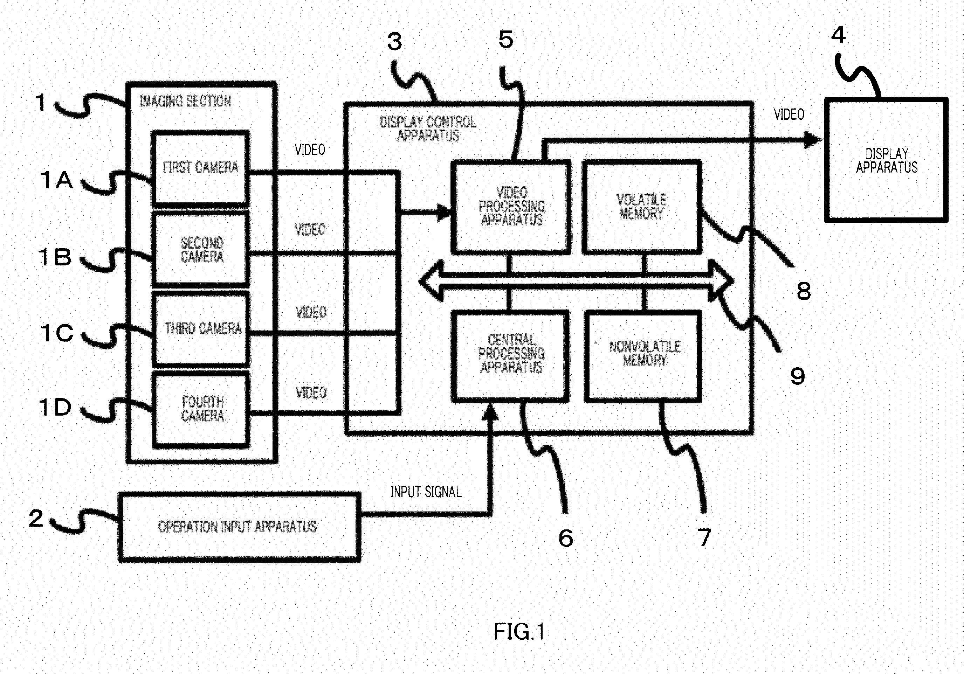

Embodiment 1 of a vehicle-mounted video display apparatus according to the present invention will now be described using the accompanying drawings. FIG.1 is a block diagram of a vehicle-mounted video display apparatus according to Embodiment 1 of the present invention

As shown in FIG. 1 , the vehicle-mounted video display apparatus is provided with imaging section 1, operation input apparatus 2, display control apparatus 3, and display apparatus 4. Imaging section 1 comprises a plurality of cameras with different imaging directions. Operation input apparatus 2 is used for operations by a user (that is, vehicle occupant) of a vehicle on which imaging section 1 is installed (hereinafter also referred to as "the vehicle" or "the vehicle in question"). Display control apparatus 3 is connected to imaging section 1 and operation input apparatus 2, and performs imaging control based on input signals from imaging section 1 and operation input apparatus 2. Display apparatus 4 is connected to this display control apparatus 3 and displays video input from display control apparatus 3.

Imaging section 1 is provided with a plurality of cameras with different shooting directions installed on the exterior of a vehicle. This plurality of cameras comprises first camera 1A, second camera 1B, third camera 1C, and fourth camera 1D. First camera 1A, second camera 1B, third camera 1C, and fourth camera 1D shoot rearward, forward, leftward, and rightward, respectively. The captured videos are videos shot in directions that are parts of the vehicle's surroundings. Rearward-of-vehicle captured video, forward-of-vehicle captured video, leftward-of-vehicle captured video, and rightward-of vehicle captured video, captured by first camera 1A, second camera 1B, third camera 1C, and fourth camera 1D, respectively, are input to display control apparatus 3.

Operation input apparatus 2 is an apparatus that detects a driver's intended display denoting a wish to change video of the viewpoint displayed on display apparatus 4 to video of a different viewpoint. Operation input apparatus 2 comprises, for example, a shift lever, winker lever, touch panel, remote control, or the like (not shown). When the driver performs an operation identifying the direction of travel of the vehicle by means of the shift lever, winker lever, or the like, operation input apparatus 2 transmits an operation signal or communication message input signal to display control apparatus 3. Or, if the driver or a passenger performs an operation that selects camera video for display from among the captured videos captured by first camera 1A, second camera 1B, third camera 1C, and fourth camera 1D, operation input apparatus 2 transmits an operation signal or communication message input signal to display control apparatus 3.

Display control apparatus 3 comprises video processing apparatus 5, central processing apparatus 6, nonvolatile memory 7, volatile memory 8, and bus 9. Display control apparatus 3 functioning as a control section performs various kinds of control processing, such as creating video to be displayed by display apparatus 4, based on camera video from imaging section 1. For example, display control apparatus 3 performs synthesis processing that synthesizes overhead-view video from imaging section 1 camera video, switching processing that switches from this overhead-view video to imaging section 1 camera video, and creation processing that creates video whose viewpoint has been changed from the overhead-view video viewpoint to the camera video viewpoint at the time of this switching processing. By means of such processing, when video of a certain viewpoint displayed on display apparatus 4 changes to video of a different viewpoint due to an operation input apparatus 2 operation, display control apparatus 3 creates video whose viewpoint is changed smoothly, with no abrupt change of viewpoint. For example, video is created in which a change is made smoothly from an overhead-view video viewpoint to a viewpoint of video shot rearward. By this means, a driver or other vehicle user can feel that his own line of sight is shifting, and can comprehend video intuitively. Various processing performed by display control apparatus 3 may be processing in software such as a program, or may be processing in hardware using different chips or the like.

Video processing apparatus 5 functioning as a creation section comprises a VPU (Video Processing Unlit), for example. Video processing apparatus 5 is connected to first camera 1A, second camera 1B, third camera 1C, and fourth camera 1D. Camera videos are input to video processing apparatus 5 from first camera 1A, second camera 1B, third camera 1C, and fourth camera 1D. Video processing apparatus 5 creates video based on camera videos input from imaging section 1 in accordance with a central processing apparatus 6 instruction. Then video processing apparatus 5 outputs this created video to display apparatus 4. For example, video processing apparatus 5 synthesizes an overhead-view video showing the entire surroundings of the vehicle from an overhead viewpoint, and outputs this overhead-view video to display apparatus 4.

Central processing apparatus 6 comprises a CPU (Central Processing Unit). Central processing apparatus 6 is connected to operation input apparatus 2. Central processing apparatus 6 performs various kinds of processing, such as control of video processing apparatus 5, based on input signals from operation input apparatus 2. For example, based on an input signal from operation input apparatus 2, central processing apparatus 6 selects camera video from any of first camera 1A, second camera 1B, third camera 1C, and fourth camera 1D of imaging section 1, and performs processing instructing video processing apparatus 5 which camera video to use to create video based on the selection result.

Nonvolatile memory 7 comprises a HDD (Hard Disk Drive) or semiconductor memory. Nonvolatile memory 7 stores various kinds of video such as video of the vehicle in question, animation, or the like, used for video processing apparatus 5 video creation processing, and a program that controls central processing apparatus 6. Nonvolatile memory '7 stores, for example, video of a viewpoint looking forward through the passenger compartment of a vehicle from the center of the rear seat of the vehicle. The control program is read into nonvolatile memory 7, and video is read into video processing apparatus 5. For example, when video processing apparatus 5 creates an overhead-view video from imaging section 1 camera video, graphic data of the vehicle in question is read into video processing apparatus 5.

Volatile memory 8 comprises RAM (Random Access Memory). Volatile memory 8 temporarily stores video processing apparatus 5 and central processing apparatus 6 processing results.

Bus 9 connects video processing apparatus 5, central processing apparatus 6, nonvolatile memory 7, and volatile memory 8.

Display apparatus 4 functioning as a display section comprises a liquid crystal, organic EL, or plasma display. Display apparatus 4 displays video input from display control apparatus 3. Here, display control apparatus 3 causes display apparatus 4 to display only one video, not two or more simultaneously. By this means, even though display apparatus 4 is a small vehicle-mounted display, the entire display surface can be used to display imaging section 2 captured video, making it easy for the driver to ascertain the situation around the vehicle at a glance.

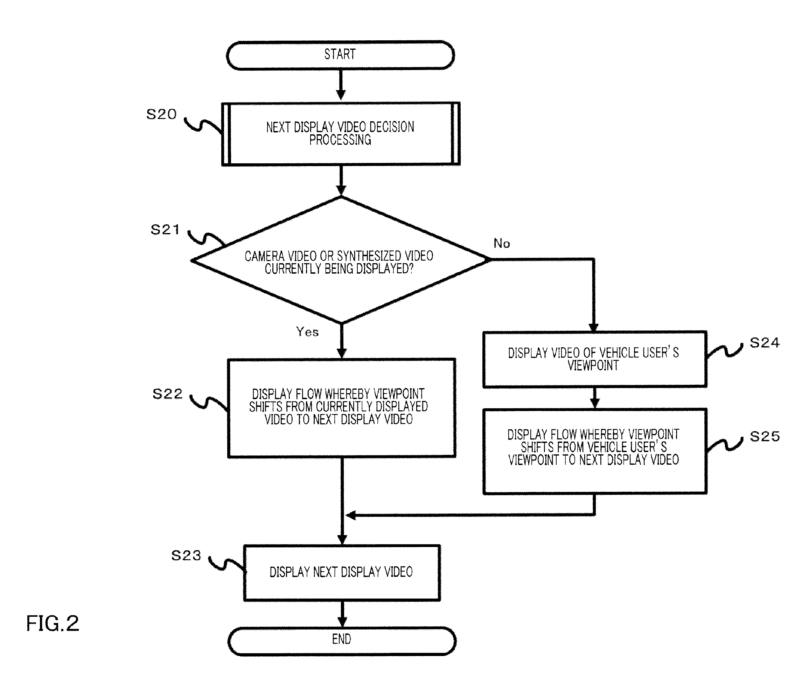

Next, video display control by display control apparatus 3 will now be described using FIG.2. FIG.2 is a flowchart showing video display control by display control apparatus 3.

As shown in step S20 in FIG.2, central processing apparatus 6 performs next display video decision processing that decides the video of which viewpoint is to be displayed next on display apparatus 4 - in other words, the video of which viewpoint a vehicle user wishes to display next. This next display video decision processing will be described later herein. Next, as shown in step S21, central processing apparatus 6 determines whether display apparatus 4 is currently displaying camera video or synthesized video synthesized by video processing apparatus 5.

In the case of a YES determination in step S21, as shown in step S22 central processing apparatus 6 issues an instruction to video processing apparatus 5 to create video whose viewpoint is changed continuously or in stages from the viewpoint of the video currently being displayed by display apparatus 4 to that of video of the viewpoint decided in step S20. Based on this instruction from central processing apparatus 6, video processing apparatus 5 creates video whose viewpoint is changed continuously or in stages from the viewpoint of the video currently being displayed by display apparatus 4 to that of video of the viewpoint decided in step S20. Then video processing apparatus 5 outputs this created video to display apparatus 4, and display apparatus 4 displays this video with a changing viewpoint. Then, as shown in step S23, central processing apparatus 6 causes display apparatus 4 to display video of the viewpoint decided in step S20.

On the other hand, in the case of a NO determination in step S21, central processing apparatus 6 causes display apparatus 4 to display video of a vehicle user's viewpoint in accordance with a control program stored in nonvolatile memory 7 beforehand. For example, in accordance with a central processing apparatus 6 instruction, video processing apparatus 5 reads video of a viewpoint looking forward through the passenger compartment of a vehicle from the center of the rear seat of the vehicle. Video processing apparatus 5 causes display apparatus 4 to display this video read from nonvolatile memory 7. Then, as shown in step S25, central processing apparatus 6 issues an instruction to video processing apparatus 5 to create video whose viewpoint is changed continuously or in stages from that of the vehicle user viewpoint video being displayed on display apparatus 4 to that of video of the viewpoint decided in step S20. Based on this instruction from central processing apparatus 6, video processing apparatus 5 creates video whose viewpoint is changed continuously or in stages from the viewpoint of the video currently being displayed by display apparatus 4 to that of video of the viewpoint decided in step S20. Then video processing apparatus 5 outputs this created video to display apparatus 4, and display apparatus 4 displays this video with a changing viewpoint. Then, as shown in step S23, central processing apparatus 6 causes display apparatus 4 to display video of the viewpoint decided in step S20.

By this means, even when video of the viewpoint displayed on display apparatus 4 changes to video of a different viewpoint, an image can be created whose viewpoint changes smoothly, with no abrupt change of viewpoint. Therefore, a driver or other vehicle user can feel that his own line of sight is shifting, and can comprehend video intuitively.

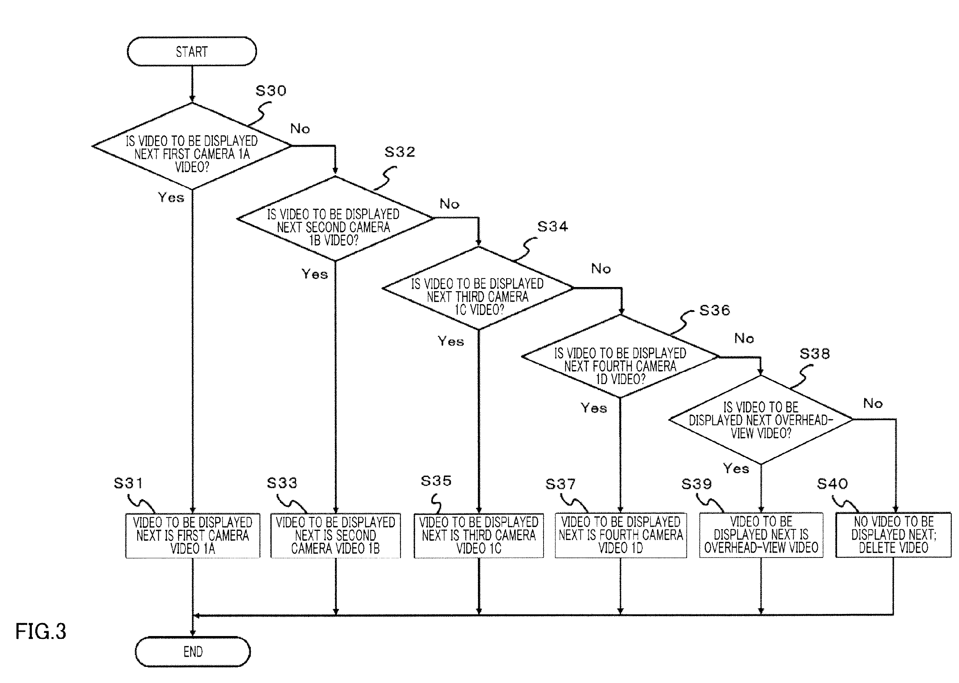

Next, the next display video decision processing shown in step S20 in FIG.2 will now be described using an accompanying drawing. FIG.3 is a flowchart of next display video decision processing shown in step S20 in FIG.2.

As shown in step S30, central processing apparatus 6 determines from an operation input apparatus 2 input signal whether or not video to be displayed next is first camera 1 A video. For example, if a signal indicating that the shift lever has been changed to a forward direction such as Drive, or a signal indicating that first camera 1A video has been selected by means of a touch panel or the like, has been input from operation input apparatus 2, the step S30 determination result is YES. In the case of a YES determination in step S30, as shown in step S31 central processing apparatus 6 determines that the video to be displayed next is first camera video 1A. In other words, central processing apparatus 6 determines that a vehicle user has selected first camera 1A video as the video to be displayed next.

In the case of a NO determination in step S30, as shown in step S32 central processing apparatus 6 determines from an operation input apparatus 2 input signal whether or not video to be displayed next is second camera 1B video. For example, if a signal indicating that the shift lever has been changed to reverse, or a signal indicating that second camera 1B video has been selected by means of a touch panel or the like, has been input from operation input apparatus 2, the step S32 determination result is YES. In the case of a YES determination in step S32, as shown in step S33 central processing apparatus 6 determines that the video to be displayed next is second camera video 1B. In other words, central processing apparatus 6 determines that a vehicle user has selected second camera 1B video as the video to be displayed next.

In the case of a NO determination in step S32, as shown in step S34 central processing apparatus 6 determines from an operation input apparatus 2 input signal whether or not video to be displayed next is third camera 1C video. For example, if a signal indicating that the driver's intention of changing the direction of travel of the vehicle toward the right has been indicated by a winker lever operation, or a signal indicating that third camera 1C video has been selected by means of a touch panel or the like, has been input from operation input apparatus 2, the step S34 determination result is YES. In the case of a YES determination in step S34, as shown in step S35 central processing apparatus 6 determines that the video to be displayed next is third camera video 1C. In other words, central processing apparatus 6 determines that a vehicle user has selected third camera 1C video as the video to be displayed next.

In the case of a NO determination in step S34, as shown in step S36 central processing apparatus 6 determines from an operation input apparatus 2 input signal whether or not video to be displayed next is fourth camera 1D video. For example, if a signal indicating that the driver's intention of changing the direction of travel of the vehicle toward the left has been indicated by a winker lever operation, or a signal indicating that fourth camera 1D video has been selected by means of a touch panel or the like, has been input from operation input apparatus 2, the step S36 determination result is YES. In the case of a YES determination in step S36, as shown in step S37 central processing apparatus 6 determines that the video to be displayed next is fourth camera video 1D. In other words, central processing apparatus 6 determines that a vehicle user has selected fourth camera 1D video as the video to be displayed next.

In the case of a NO determination in step S36, as shown in step S38 central processing apparatus 6 determines from an operation input apparatus 2 input signal whether or not video to be displayed next is overhead-view video. For example, if a signal indicating that overhead-view video has been selected by means of a touch panel or the like has been input from operation input apparatus 2, the step S38 8 determination result is YES. In the case of a YES determination in step S38, as shown in step S39 central processing apparatus 6 determines that the video to be displayed next is overhead-view video using videos of first through fourth cameras 1A through 1D. In other words, central processing apparatus 6 determines that a vehicle user has selected overhead-view video as the video to be displayed next.

In the case of a NO determination in step S38, as shown in step S40 central processing apparatus 6 determines that there is no video to be displayed next, and that video is to be deleted without being displayed on display apparatus 4. In other words, central processing apparatus 6 determines that a vehicle user has selected not to display video.

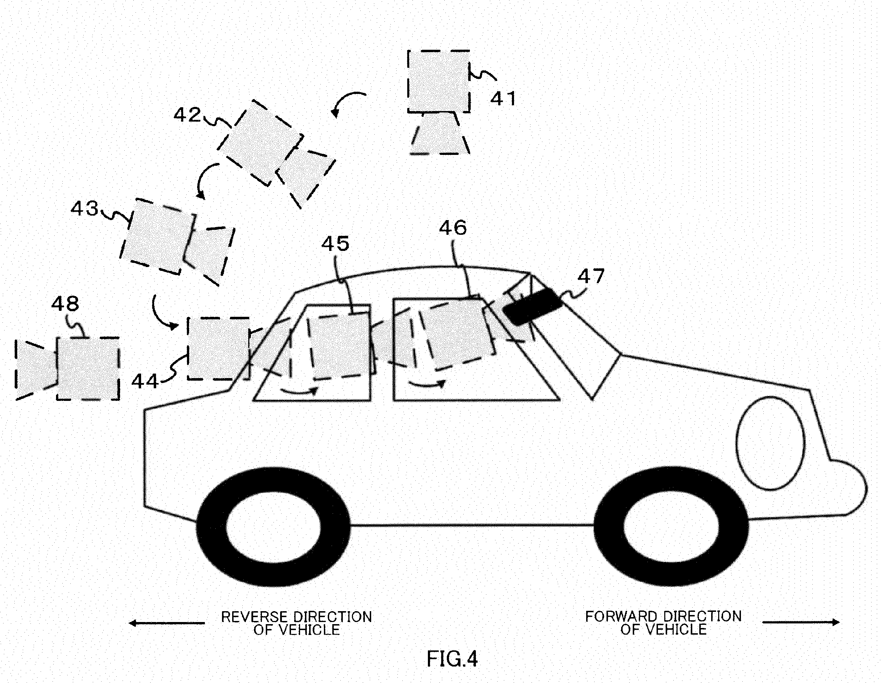

Next, the way in which a viewpoint of video that central processing apparatus 6 of display control apparatus 3 causes to be created by video processing apparatus 5 changes will now be described using an accompanying drawing. FIG.4 is a drawing explaining viewpoint changing when a driver selects rear camera video as video to be displayed next by means of operation input apparatus 2 from a state in which overhead-view video is displayed on display apparatus 4.

As shown in FIG.4, virtual viewpoint 41 indicates a virtual viewpoint of overhead-view video created by video processing apparatus 5 based on camera videos of first through fourth cameras 1A through 1D.

Central processing apparatus 6 causes video processing apparatus 5 to create video in which a virtual viewpoint is changed continuously or in stages from virtual viewpoint 41 to virtual viewpoint 42, and from virtual viewpoint 42 to virtual viewpoint 43. As shown by virtual viewpoints 41 through 43, this changing of the virtual viewpoint means a change whereby the viewpoint rotates toward the front and shifts toward the rear.

Next, central processing apparatus 6 causes video processing apparatus 5 to create video in which a virtual viewpoint is changed continuously or in stages from virtual viewpoint 43 to virtual viewpoint 44. As shown by virtual viewpoint 43 and virtual viewpoint 44, this changing of the virtual viewpoint means a change whereby the viewpoint passes through the rear window (not shown) of the vehicle and enters the passenger compartment.

Then central processing apparatus 6 causes video processing apparatus 5 to create video in which a virtual viewpoint is changed continuously or in stages from virtual viewpoint 44 to virtual viewpoint 45, and from virtual viewpoint 45 to virtual viewpoint 46. As shown by virtual viewpoints 44 through 46, this changing of the virtual viewpoint means a change whereby the viewpoint shifts from the rear seat area of the vehicle toward the front seat area, and further zooms in on rear-view mirror 47.

Central processing apparatus 6 then causes video processing apparatus 5 to create video in which a virtual viewpoint is changed continuously or in stages from virtual viewpoint 46 to virtual viewpoint 48. As shown by virtual viewpoints 46 and 48, this changing of the virtual viewpoint means a change whereby, together with the zoom-in on rear-view mirror 47, the proportion of a rearward viewpoint shown in rear-view mirror 47 mixed with a viewpoint directed forward progressively increases, so that the viewpoint changes to this rearward viewpoint.

In causing video processing apparatus 5 to create video in which a change is made continuously or in stages from video of a certain viewpoint to video of a different viewpoint, central processing apparatus 6 may create new video by means of computational processing from imaging section 1 camera video or video of an in-vehicle camera (not shown) or the like, or may use video created in the past and stored in nonvolatile memory 7.

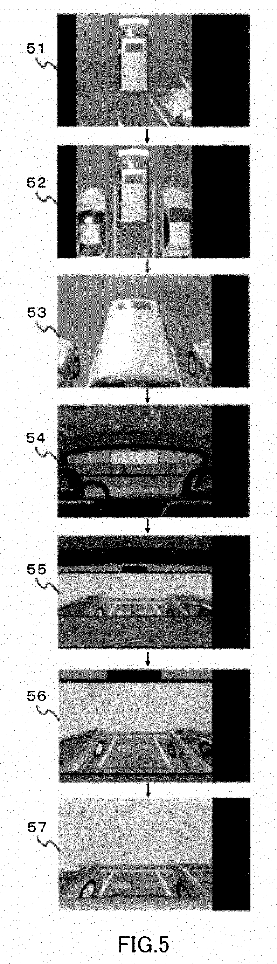

Next, changing of video created by video processing apparatus 5 in accordance with a central processing apparatus 6 instruction will now be described using an accompanying drawing. FIG.5 is a drawing explaining changing of video displayed on a display apparatus according to the virtual viewpoints shown in FIG.4.

Video 51 is overhead-view video showing a state when a vehicle has started to move backward after the operation input apparatus 2 shift lever has been shifted to reverse in order to park the vehicle. The virtual viewpoint of video 51 corresponds to virtual viewpoint 41 in FIG.4.

Video 52 is video showing a state in which the vehicle is moving backward in order to park. The virtual viewpoint of video 52 corresponds to virtual viewpoint 42 in FIG.4.

Video 53 is video showing a state in which the vehicle is moving further backward. The virtual viewpoint of video 53 corresponds to virtual viewpoint 43 in FIG.4. Video processing apparatus 5 creates videos 51 through 53 using graphics of the vehicle in question stored in nonvolatile memory 7.

Video 54 is video showing a state when looking toward the front of the vehicle from the center of the rear seat in the passenger compartment. The virtual viewpoint of video 54 corresponds to virtual viewpoint 44 in FIG.4.

Video 55 is video showing a state when zooming in on the rear-view mirror of the vehicle. The virtual viewpoint of video 55 corresponds to virtual viewpoint 45 in FIG.4. At this time, video 55 includes a mix of video showing the interior of the vehicle from a forward viewpoint and video showing the rear of the vehicle from a rearward viewpoint (video within the rear-view mirror). This video within the rear-view mirror may be video obtained by having video processing apparatus 5 perform processing such as size reduction on camera video of second camera 1B. From a processing speed standpoint, this video within the rear-view mirror may also be video such as a graphic representing the rear of the vehicle stored in nonvolatile memory 7 beforehand.

Video 56 is video showing a state when zooming in further on the rear-view mirror of the vehicle. The virtual viewpoint of video 56 corresponds to virtual viewpoint 46 in FIG.4. At this time, the proportion of the entire video occupied by the rear-view mirror area in video 56 is larger than in video 55. The video shown within this rear-view mirror has a viewpoint toward the rear of the vehicle.

Video 57 is camera video of second camera 1B. The virtual viewpoint of video 57 corresponds to virtual viewpoint 48 in FIG.4.

Since changing from an overhead-view video viewpoint to a second camera 1B video camera viewpoint is performed continuously or in stages in this way, there is no abrupt change of viewpoint for the driver. Therefore, even though the display apparatus 4 display changes from an overhead-view video viewpoint to a second camera 1B video camera viewpoint, a vehicle user can determine intuitively that the video displayed on display apparatus 4 is second camera 1B captured video. Also, even if display apparatus 4 is a small display for in-vehicle use, as long as central processing apparatus 6 causes display apparatus 4 to display only second camera 1B captured video, a vehicle user can easily ascertain the situation around the vehicle at a glance.

Furthermore, video displayed on display apparatus 4 changes from overhead-view video to second camera 1B camera video via a vehicle interior graphic or video provided in nonvolatile memory 7 beforehand. By this means, a vehicle user can determine intuitively that a switch has been made to second camera 1B camera video without feeling that the video displayed on display apparatus 4 has changed abruptly.

In particular, second camera 1B camera video is displayed within a vehicle interior graphic or video shot by another camera (not shown) provided in nonvolatile memory 7 beforehand, and the proportion of second camera 1 B camera video increases continuously or in stages. By this means, a vehicle user can ascertain the situation around the vehicle at a glance without any sense of unnaturalness regarding the change of video.

Video combined within a vehicle interior graphic or video provided beforehand may be partial video clipped from second camera 1B camera video, or may be entire video resulting from reducing second camera 1 B camera video in size.

Provision may also be made for partial video clipped from second camera 1B camera video and a graphic or video representing part of the vehicle interior provided beforehand to be displayed, and for this graphic or video to be shifted continuously or in stages. Any kind of method may be used for this shift, such as size reduction or fade-out, as long as it involves a vehicle interior graphic or video growing smaller continuously or in stages.

As described above, central processing apparatus 6 causes video processing apparatus 5 to create video in which a virtual viewpoint is zoomed-in on in an associated object in order for a vehicle user to check a certain direction outside the vehicle. By this means, video to be displayed next on display apparatus 4 can be suggested to a vehicle user, and the vehicle user can be allowed to ascertain intuitively the direction of the relevant video.

For example, central processing apparatus 6 causes video processing apparatus 5 to create video in which zooming-in is performed progressively on an associated object in order to confirm the vehicle exterior from a vehicle interior graphic or video provided beforehand. By this means, video in which a viewpoint of a vehicle user viewing this associated object and a viewpoint of a certain direction outside the vehicle are mixed can be displayed on display apparatus 4.

Then, by means of zooming-in, the proportion of video viewed from this vehicle user's viewpoint gradually decreases, while the proportion of video viewed from the viewpoint of a certain direction outside the vehicle increases. And, finally, only video capturing the viewpoint of a certain direction outside the vehicle is displayed on display apparatus 4. By this means, a vehicle user can ascertain the direction of video intuitively without feeling that the video viewpoint has changed abruptly.

### (Sample Variant 1)

Sample Variant 1 of Embodiment 1 will now be described. A detailed description of configuration elements similar to those in Embodiment 1 is omitted here.

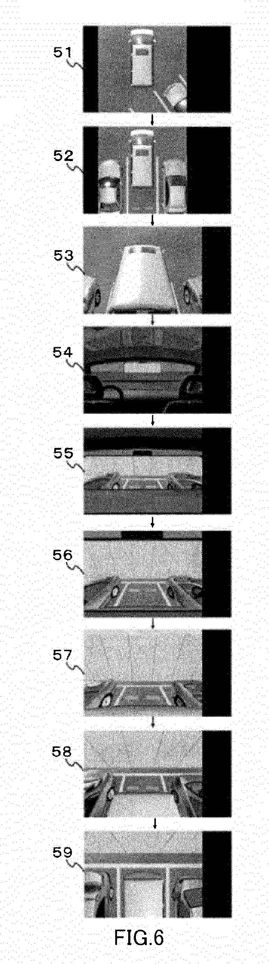

FIG.6 is a drawing explaining a sample variant of video that central processing apparatus 6 causes video processing apparatus 5 to create as shown in FIG. 5.

As shown in FIG.6, after second camera 1B camera video is shown in video 57, central processing apparatus 6 may further cause video processing apparatus 5 to create video such that the viewpoint is returned continuously or in stages to an overhead-view video virtual viewpoint. In other words, video may be created whereby the viewpoint is returned to the viewpoint of the video originally displayed on display apparatus 4. Video 58 is video resulting from rotating the second camera 1B viewpoint downward and shifting the viewpoint forward and upward from the position of the second camera 1B viewpoint.

Video 59 is video from an overhead viewpoint such as in video 51. Central processing apparatus 6 receives a vehicle rearward speed signal from operation input apparatus 2, and when this speed becomes less than or equal to a predetermined threshold value, causes video processing apparatus 5 to perform processing that returns to video of the original viewpoint such as in video 57 through video 59. When the rearward speed of the vehicle becomes less than or equal to the predetermined threshold value, central processing apparatus 6 determines that a vehicle user wishes to check overhead-view video showing the entire surroundings of the vehicle rather than rearward video.

By means of this sample variant, a vehicle user can ascertain the direction of video intuitively without feeling that the video viewpoint has changed abruptly, even when temporarily viewing video of a different direction from video of a certain direction and then again viewing the video of the original direction.

### (Sample Variant 2)

Sample Variant 2 of Embodiment 1 will now be described. A detailed description of configuration elements similar to those in Embodiment 1 is omitted here. In Sample Variant 2, a case is described in which central processing apparatus 6 receives a signal from operation input apparatus 2 indicating that the direction of travel of the vehicle is to be changed toward the right.

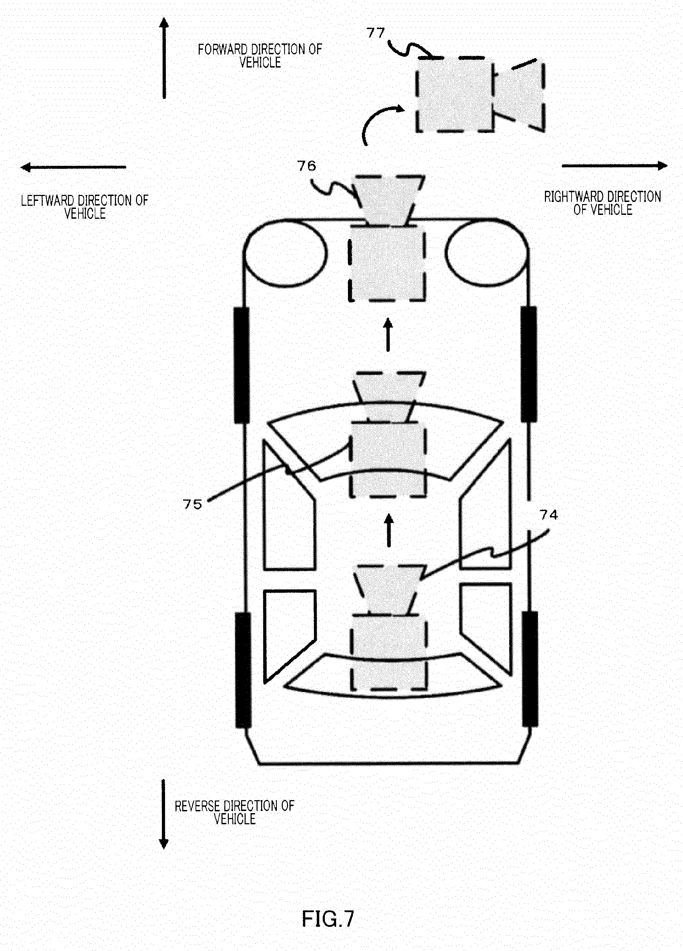

FIG.7 is a drawing explaining a sample variant of viewpoint changing of video that central processing apparatus 6 causes video processing apparatus 5 to create as shown in FIG.4.

Like virtual viewpoint 44 in FIG.4, virtual viewpoint 74 means a change whereby the viewpoint passes through the rear window (not shown) of the vehicle and enters the passenger compartment. Changes up to this virtual viewpoint 74 are similar to changes up to virtual viewpoint 44 in FIG.4, and therefore a description thereof is omitted here. As shown by virtual viewpoint 75, in this sample variant the viewpoint changes in a direction passing through the windshield of the vehicle.

Central processing apparatus 6 causes video processing apparatus 5 to create video in which the viewpoint is changed continuously or in stages from virtual viewpoint 74 toward the front of the vehicle, to virtual viewpoint 75, virtual viewpoint 76, and virtual viewpoint 77, and causes display apparatus 4 to display this created video. By this means, a vehicle user can ascertain the direction of video intuitively without feeling that the video viewpoint has changed abruptly.

### (Sample Variant 3)

Sample Variant 3 of Embodiment 1 will now be described. A detailed description of configuration elements similar to those in Embodiment 1 is omitted here. In Sample Variant 3, a case is described in which central processing apparatus 6 receives a signal from operation input apparatus 2 indicating that the direction of travel of the vehicle is to be changed toward the right.

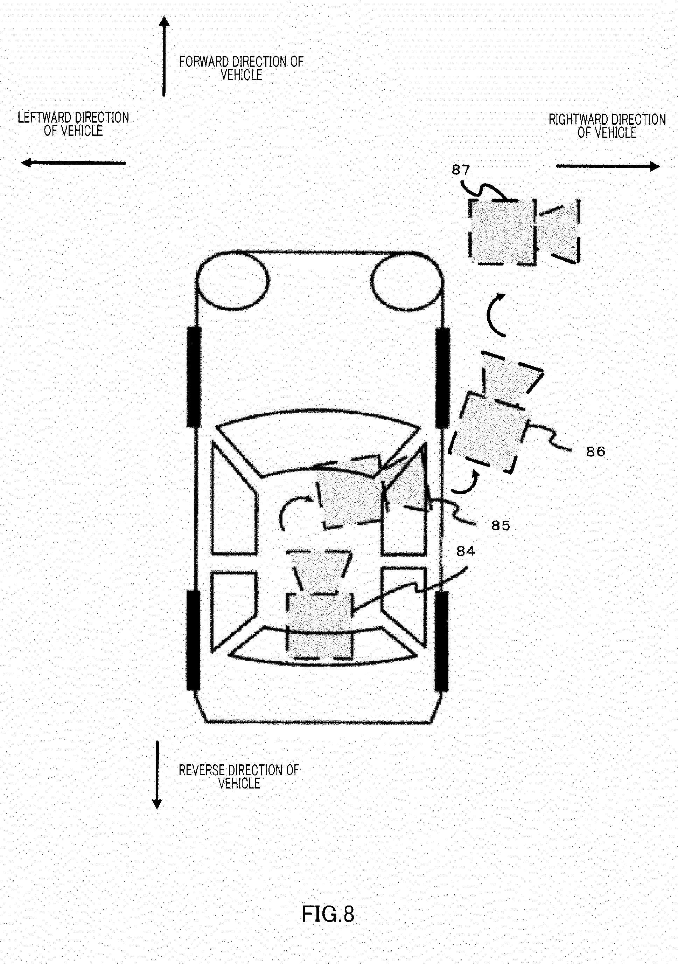

FIG.8 is a drawing explaining a sample variant of viewpoint changing of video that central processing apparatus 6 causes video processing apparatus 5 to create as shown in FIG.4.

Like virtual viewpoint 44 in FIG.4, virtual viewpoint 84 means a change whereby the viewpoint passes through the rear window (not shown) of the vehicle and enters the passenger compartment. Changes up to this virtual viewpoint 84 are similar to changes up to virtual viewpoint 44 in FIG.4, and therefore a description thereof is omitted here. As shown by virtual viewpoint 85, in this sample variant the viewpoint changes in a direction passing through a side window of the vehicle.

Central processing apparatus 6 causes video processing apparatus 5 to create video in which the viewpoint is changed continuously or in stages from virtual viewpoint 84 toward the front of the vehicle, to virtual viewpoint 85, virtual viewpoint 86, and virtual viewpoint 87, and causes display apparatus 4 to display this created video. By this means, a vehicle user can ascertain the direction of video intuitively without feeling that the video viewpoint has changed abruptly. Also, since a side window is passed through at an early stage in the change of vehicle interior viewpoint, a vehicle user can ascertain the direction of video at an early stage.

### (Sample Variant 4)

Sample Variant 4 of Embodiment 1 will now be described. A detailed description of configuration elements similar to those in Embodiment 1 is omitted here. In Sample Variant 4, a case is described in which central processing apparatus 6 receives a signal from operation input apparatus 2 indicating that the direction of travel of the vehicle is to be changed toward the right.

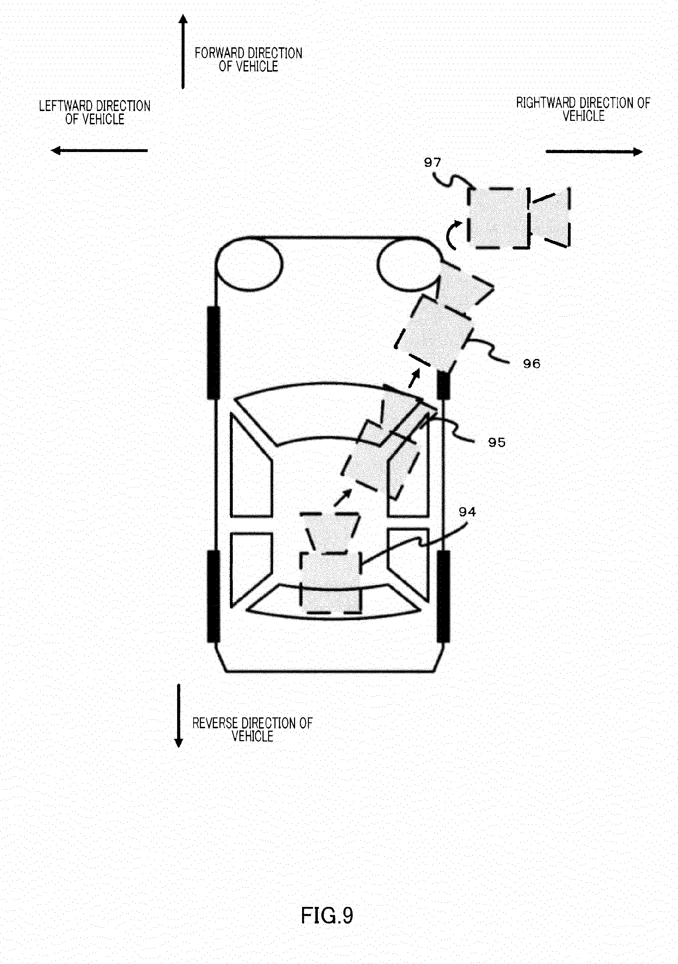

FIG.9 is a drawing explaining a sample variant of viewpoint changing of video that central processing apparatus 6 causes video processing apparatus 5 to create as shown in FIG.4. Like virtual viewpoint 44 in FIG.4, virtual viewpoint 94 means a change whereby the viewpoint passes through the rear window (not shown) of the vehicle and enters the passenger compartment. Changes up to this virtual viewpoint 94 are similar to changes up to virtual viewpoint 44 in FIG.4, and therefore a description thereof is omitted here. As shown by virtual viewpoint 95, in this sample variant the viewpoint changes in a direction passing between the windshield and a side window of the vehicle.

Central processing apparatus 6 causes video processing apparatus 5 to create video in which the viewpoint is changed continuously or in stages from virtual viewpoint 94 toward the front of the vehicle, to virtual viewpoint 95, virtual viewpoint 96, and virtual viewpoint 97, and causes display apparatus 4 to display this created video. By this means, since the change of video viewpoint is gradual, a vehicle user can ascertain the direction of video intuitively.

### (Sample Variant 5)

Sample Variant 5 of Embodiment 1 will now be described. A detailed description of configuration elements similar to those in Embodiment 1 is omitted here. In Sample Variant 5, video display control by display control apparatus 3 is described.

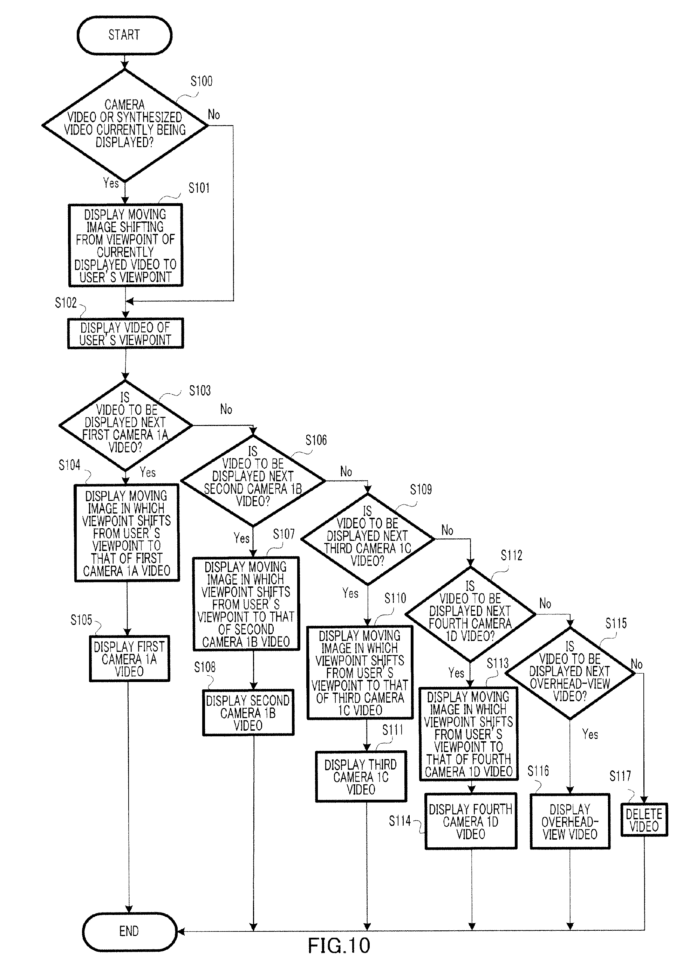

FIG.10 is a flowchart explaining a sample variant of video display control by display control apparatus 3 as shown in FIG.2. In the following description, a viewpoint of a vehicle user may be a viewpoint when the vehicle interior is viewed from the rear seat area of the vehicle, or may be a viewpoint forward from the driver's seat.

As shown in step S100, central processing apparatus 6 determines whether display apparatus 4 is currently displaying camera video or synthesized video synthesized by video processing apparatus 5.

In the case of a YES determination in step S 100, as shown in step S101 central processing apparatus 6 issues an instruction to video processing apparatus 5 to create video whose viewpoint is changed continuously or in stages from the viewpoint of the video currently being displayed by display apparatus 4 to the viewpoint of a vehicle user. Based on this instruction from central processing apparatus 6, video processing apparatus 5 creates video whose viewpoint is changed continuously or in stages from the viewpoint of the video currently being displayed by display apparatus 4 to the vehicle user's viewpoint. Then video processing apparatus 5 outputs this created video to display apparatus 4, and display apparatus 4 displays this video with a changing viewpoint. Then, as shown in step S102, central processing apparatus 6 displays video of the vehicle user's viewpoint. In the case of a NO determination in step S100, also, central processing apparatus 6 displays video of the vehicle user's viewpoint.

Next, as shown in step S103, central processing apparatus 6 determines from an operation input apparatus 2 input signal whether or not video to be displayed next is first camera 1A video. The determination criterion in step S103 is the same as that in step S30 above. In the case of a YES determination in step S103, as shown in step S104 central processing apparatus 6 causes video processing apparatus 5 to create video in which the viewpoint shifts from the vehicle user's viewpoint to that of first camera 1A video, and causes display apparatus 4 to display this created video. Then, as shown in step S105, central processing apparatus 6 causes display apparatus 4 to display first camera 1A video.

In the case of a NO determination in step S103, as shown in step S106 central processing apparatus 6 determines from an operation input apparatus 2 input signal whether or not video to be displayed next is second camera 1B video. The determination criterion in step S106 is the same as that in step S32 above. In the case of a YES determination in step S106, as shown in step S107 central processing apparatus 6 causes video processing apparatus 5 to create video in which the viewpoint shifts from the vehicle user's viewpoint to that of second camera 1B video, and causes display apparatus 4 to display this created video. Then, as shown in step S108, central processing apparatus 6 causes display apparatus 4 to display second camera 1B video.

In the case of a NO determination in step S106, as shown in step S109 central processing apparatus 6 determines from an operation input apparatus 2 input signal whether or not video to be displayed next is third camera 1C video. The determination criterion in step S109 is the same as that in step S34 above. In the case of a YES determination in step S109, as shown in step S110 central processing apparatus 6 causes video processing apparatus 5 to create video in which the viewpoint shifts from the vehicle user's viewpoint to that of third camera 1C video, and causes display apparatus 4 to display this created video. Then, as shown in step S111, central processing apparatus 6 causes display apparatus 4 to display third camera 1C video.

In the case of a NO determination in step S109, as shown in step S 112 central processing apparatus 6 determines from an operation input apparatus 2 input signal whether or not video to be displayed next is fourth camera 1D video. The determination criterion in step S 112 is the same as that in step S36 above. In the case of a YES determination in step S 112, as shown in step S 113 central processing apparatus 6 causes video processing apparatus 5 to create video in which the viewpoint shifts from the vehicle user's viewpoint to that of fourth camera 1D video, and causes display apparatus 4 to display this created video. Then, as shown in step S114, central processing apparatus 6 causes display apparatus 4 to display fourth camera 1D video.

In the case of a NO determination in step S 112, as shown in step S115 central processing apparatus 6 determines from an operation input apparatus 2 input signal whether or not video to be displayed next is overhead-view video. The determination criterion in step S115 is the same as that in step S38 above. In the case of a YES determination in step S 115, as shown in step S 116 central processing apparatus 6 causes video processing apparatus 5 to create overhead-view video using first through fourth cameras 1A through 1D, and causes display apparatus 4 to display this created overhead-view video.

In the case of a NO determination in step S 115, as shown in step S 117 central processing apparatus 6 determines that there is no video to be displayed next, and that video is to be deleted without being displayed on display apparatus 4.

By means of the above display control apparatus 3 control, whatever kind of input signal comes in from operation input apparatus 2, display apparatus 4 always displays video of a specific direction around a vehicle after displaying video of a vehicle user's viewpoint. Therefore, a vehicle user can ascertain the direction of video intuitively without feeling that the video viewpoint has changed abruptly.

The disclosure of Japanese Patent Application No.2009-153393, filed on June 29, 2009, including the specification, drawings and abstract, is incorporated herein by reference in its entirety.

### Industrial Applicability

A vehicle-mounted video display apparatus according to the present invention is suitable for use as a field-of-view support apparatus for vehicle use whereby, when switching is performed from video of a certain viewpoint to video of another viewpoint, a vehicle user can ascertain intuitively the video of which direction has been switched to.

### Reference Signs List

- 1: Imaging section
- 2: Operation input apparatus
- 3: Display control apparatus
- 4: Display apparatus
- 5: Video processing apparatus
- 6: Central processing apparatus

## Claims

1. A vehicle-mounted video display apparatus comprising:
an imaging section composed of a plurality of cameras that shoot a vehicle's surroundings in different shooting directions;
a creation section that creates video based on captured video captured by the imaging section;
a display section that displays video created by the creation section; and
a control section that performs control that selects video of a specific direction from among captured videos captured by the imaging section, and switches display for the display section from video created by the creation section to selected video of a specific direction,
wherein the control section causes the display section to display video whose viewpoint is changed continuously or in stages from a viewpoint of video created by the creation section to a viewpoint of selected video of a specific direction.

2. The vehicle-mounted video display apparatus according to claim 1,
wherein the control section causes the display section to display selected video of a specific direction and video of an in-vehicle object suggesting video of a specific direction, and increases a proportion of selected video of a specific direction continuously or in stages.

3. The vehicle-mounted video display apparatus according to claim 1,
wherein the control section, when vehicle rear video is selected from among captured videos captured by the imaging section, causes the display section to display video in which a change is made from a viewpoint of video created by the creation section to a viewpoint viewing a vehicle interior from the vehicle rear, then a change is made from a viewpoint viewing the vehicle interior from the vehicle rear to a viewpoint whereby a rear-view mirror is enlarged, and a change is further made from a viewpoint whereby the rear-view mirror is enlarged to a viewpoint of vehicle rear video captured by the imaging section.

4. The vehicle-mounted video display apparatus according to claim 1,
wherein the control section causes the display section to display a graphic of a vehicle interior stored in a storage section or video of a vehicle interior captured by a different imaging section and part of selected video of a specific direction, and increases a proportion of selected video of a specific direction continuously or in stages.

5. The vehicle-mounted video display apparatus according to claim 1,
wherein the control section causes the display section to display selected video of a specific direction and a graphic of part of a vehicle interior stored in a storage section or video of part of a vehicle interior captured by a different imaging section, and shifts the graphic of part of the vehicle interior or the video of part of the vehicle interior continuously or in stages.

## Amended claims

### Amended claims under Art. 19.1 PCT

**1.** Amended)
A vehicle-mounted video display apparatus comprising:
an imaging section composed of a plurality of cameras that shoot a vehicle's surroundings in different shooting directions;
a video creation section that creates video of the vehicle's surroundings from captured video captured by this imaging section;
a display section that displays video created by this video creation section; and
a control section that performs control that selects video of a specific direction among captured videos of a vehicle's surroundings captured by the imaging section, and switches display for the display section from video created by the video creation section to this selected video of a specific direction,
wherein the control section causes the display section to display video whose viewpoint is changed continuously or in stages from a viewpoint of video created by the video creation section to a viewpoint of video of a specific direction among captured videos of a vehicle's surroundings captured by the imaging section, and, in the course of this change, causes the display section to display the selected video of a specific direction and video of an in-vehicle object suggesting this video of a specific direction, and increases a proportion of the selected video of a specific direction continuously or in stages.

**2.** Amended)
The vehicle-mounted video display apparatus according to claim 1,
wherein the control section, when rearward video is selected from among captured videos of the vehicle's surroundings captured by the imaging section, causes the display section to display video in which a change is made from a viewpoint of video created by the video creation section to a viewpoint when viewing the vehicle interior from the rear, then a change is made from this viewpoint when viewing the vehicle interior from the vehicle rear to a viewpoint whereby a rear-view mirror is enlarged, and a change is further made from this viewpoint whereby a rear-view mirror is enlarged to a viewpoint of vehicle rear video captured by the imaging section.

**3.** Amended)
The vehicle-mounted video display apparatus according to claim 1,
wherein the control section, in the process of causing the display section to display the selected video of a specific direction and video of an in-vehicle object suggesting this video of a specific direction, uses a graphic of a vehicle interior stored in a storage section or captured video of a vehicle interior captured by a different imaging section and part of the selected video of a specific direction.

**4.** Amended)
The vehicle-mounted video display apparatus according to claim 1,
wherein the control section, in the process of causing the display section to display the selected video of a specific direction and video of an in-vehicle object suggesting this video of a specific direction, uses the selected video of a specific direction and a graphic of part of a vehicle interior stored in a storage section or video in which part of a vehicle interior is imaged by a different imaging section, and shifts the graphic of part of the vehicle interior stored in the storage section or the video of part of the vehicle interior captured by the different imaging section continuously or in stages.

**5.** Amended)
A vehicle-mounted video display apparatus comprising:
a video creation section that creates, from captured video in which a vehicle's surroundings are shot in different directions by a plurality of cameras configuring an imaging section, video of the vehicle's surroundings, and outputs this created video to a display section; and
a control section that performs control that selects video of a specific direction from among captured videos of a vehicle's surroundings captured by the imaging section, and switches display for the display section from video created by the video creation section to this selected video of a specific direction,
wherein the control section causes the display section to display video whose viewpoints is changed continuously or in stages from a viewpoint of video created by the video creation section to a viewpoint of video of a specific direction among captured videos of a vehicle's surroundings captured by the imaging section, and, in the course of this change, causes the display section to display the selected video of a specific direction and video of an in-vehicle object suggesting this video of a specific direction, and increases a proportion of the selected video of a specific direction continuously or in stages.
